# EUROPÄISCHE PATENTANMELDUNG

(11) **EP 0 641 613 A1**
(43) Veröffentlichungstag der Anmeldung: **08.03.1995**
(21) Anmeldenummer: 94113264.9
(22) Anmeldetag: 25.08.1994
(51) Int. Cl.: B09B 5/00, H02K 15/00

(54) **Verfahren zum Aufbereiten von elektronischen bzw. elektrotechnischen Bauteilen**

(30) Priorität: 02.09.1993 DE 4329564
(71) Anmelder: Dipl.-Ing. SF-Ing. MANFRED BAHNEMANN RECYCLING-SYSTEME GmbH, D-78259 Mühlhausen-Ehingen (DE)
(72) Erfinder: Matijas, Jovan, D-78194 Immendingen (DE)
(74) Vertreter: Weiss, Peter, Dr. rer. nat.

(57) **Zusammenfassung**

Bei einem Verfahren zum Aufarbeiten von elektronischen bzw. elektrotechnischen Bauteilen, beispielsweise von Trafos, Spulenwicklungen, Elektromotoren od. dgl., sollen die Bauteile gespalten bzw. geschnitten werden. Dies geschieht mittels einer Vorrichtung, bei der über einer Gegenplatte (11) zum Tragen des Bauteils ein Spaltmesser (10) angeordnet ist, welches einen Hub (x) zur Gegenplatte (11) hin ausführt.

## Beschreibung

Die Erfindung betrifft ein Verfahren zum Aufbereiten von elektronischen bzw. elektrotechnischen Bauteilen, beispielsweise von Trafos, Spulenwicklungen, Elektromotoren od. dgl. sowie eine Vorrichtung hierfür.

Das Aufarbeiten von elektrotechnischen bzw. elektronischen Bauteilen stellt heute ein erhebliches Problem dar. Im Zuge der Verschärfung der Umweltschutzverordnungen müssen auch solche Werkstücke wieder aufgearbeitet werden, die bislang erhebliche Aufar-beitungsprobleme darstellten und deshalb meist einer Deponie zugeführt wurden.

Die meisten Aufarbeitungsbetriebe besitzen zur Aufarbeitung derartiger Bauteile einen Shredder, der das Werkstück in kleinere Bestandteile zerreißt. Die Größe und die Leistungsaufnahme eines Shredders hängt jedoch stark von den aufzuarbeitenden Bauteilen ab. Soll mit einem Shredder beispielsweise ein Trafo oder ein Elektromotor aufgearbeitet werden, so ist an die Leistungsaufnahme des Shredders und an dessen Ausgestaltung, insbesondere die Shredderwelle, erhebliche Anforderungen zu stellen, die nur mit einem entsprechend groß ausgelegten Shredder erreichbar sind.

Abgesehen davon bildet das Shreddern nur einen sehr ungenügenden Teil einer Aufarbeitung, da in der Regel die elektronischen bzw. elektrotechnischen Bauteile aus verschiedenen Bestandteilen bestehen, die beim Shreddern noch zusätzlich vermischt werden. Dementsprechend müssen diese Bestandteile danach wieder durch Sichter, Metallabscheider od. dgl. getrennt werden. Dies ist ein zusätzlicher Arbeitsgang, der das Aufarbeiten erheblich verteuert.

Der vorliegenden Erfindung liegt die Aufgabe zugrunde, elektronische bzw. elektrotechnische Bauteile so zu bearbeiten, daß eine Trennung von wesentlichen Bestandteilen auf einfache Art und Weise möglich ist.

Zur Lösung dieser Aufgabe führt, daß die Bauteile gespalten bzw. geschnitten werden.

Das Verfahren bezieht sich vor allem auf das Aufarbeiten von Trafos, Spulenwicklungen, Elektromotoren od. dgl.. Bei diesen Bauteilen besteht ein Kern meist aus Eisenlamellen, welche von einer Kupferwicklung umfangen sind. Beim Spalten bzw. Schneiden wird die Wicklung so gespalten bzw. aufgeschnitten, daß sie in zwei Teile auseinanderfällt und die Eisenlamellen freigibt. Dies ist eine sehr einfache aber wirkungsvolle Möglichkeit.

Eine entsprechende Vorrichtung zur Durchführung dieses Verfahrens weist ein Spaltmesser auf, welches über einer Gegenplatte angeordnet ist. Auf die Gegenplatte wird das Bauteil aufgelegt und das Spaltmesser durch einen entsprechenden Antrieb gegen die Gegenplatte bzw. das Bauteil bewegt. Dabei durchschneidet das Spaltmesser das Bauteil.

In einem besonders bevorzugten Ausführungsbeispiel der Erfindung ist ein Antrieb für das Spaltmesser abgestuft betätigbar. Diese Maßnahme dient der Sicherheit der Bedienperson. Die abgestufte Betätigung kann nur mit beiden Händen durchgeführt werden, so daß in jedem Fall gewährleistet ist, daß keine Hand der Bedienperson in der Nähe des Spaltmessers sein kann. Deshalb wird in jedem Fall ein Antrieb für den Spaltmesserhub erst dann betätigt, wenn durch die zweite Hand eine zweite Stufe eingeschaltet wird.

In der ersten Stufe, welche durch die erste Hand betätigt wird, findet entweder keines oder nur ein geringfügiges Absenken des Spaltmessers statt, wobei das Absenken sofort abgeschaltet wird, wenn ein Gegendruck stattfindet.

Diese gewünschte Betätigung des Antriebs kann beispielsweise durch einen Stößel od. dgl. erfolgen, der über einen Baudenzug mit zwei Handhebeln in Verbindung steht. Der Stößel selbst wird dabei bevorzugt von einem Kipphebel mit einem Druckhebel angegriffen, wobei der Kipphebel an einem ortsfesten Drehgelenk dreht. Die Tülle des Baudenzuges ist zwischen dem Kipphebel und dem einen Handhebel vorgesehen. Der Zug dagegen durchzieht die Tülle z.T. und ist einerseits an dem anderen Handhebel und andererseits an einem Fixpunkt festgelegt. Wird nur ein Handhebel betätigt, so findet nur eine geringe Druckbeaufschlagung des Stößels statt, die den Antrieb noch nicht oder erst in der oben erwähnten ersten Stufe einschaltet. Erst wenn der zweite Handhebel betätigt wird, erhält der Antrieb über den Stößel das Signal zu seiner vollen Betätigung.

Die Anordnung von Spaltmesser und die Ausgesteltung der gesamten Vorrichtung ist von untergeordneter Bedeutung.

Beispeilsweise kann das Spaltmesser an einem Vierkantrohr festgelegt sein, welcher den oben erwähnten Hub in einem Außenvierkantrohr durchführt. Eine derartige Vorrichtung, bei der die Vierkantrohre, der Antrieb und alle sonstigen Elemente auf einem verfahrbaren Chassis festliegen, ist zum Holzspalten bekannt, mit Ausnahme der oben erwähnten Sicherheitsschaltanordnung. Deshalb soll von der vorliegenden Erfindung auch die Verwendung dieser bekannten Holzspaltvorrichtung zum Spalten und Schneiden von elektronischen bzw. elektrotechnischen Bauteilen umfaßt sein.

Die Bauteile, bei denen das Spaltmesser einem höheren Druck unterliegen muß, kann dieses in einer feststehenden Vorrichtung angeordnet und durch entsprechende Druckzylinder od. dgl. beaufschlagt werden.

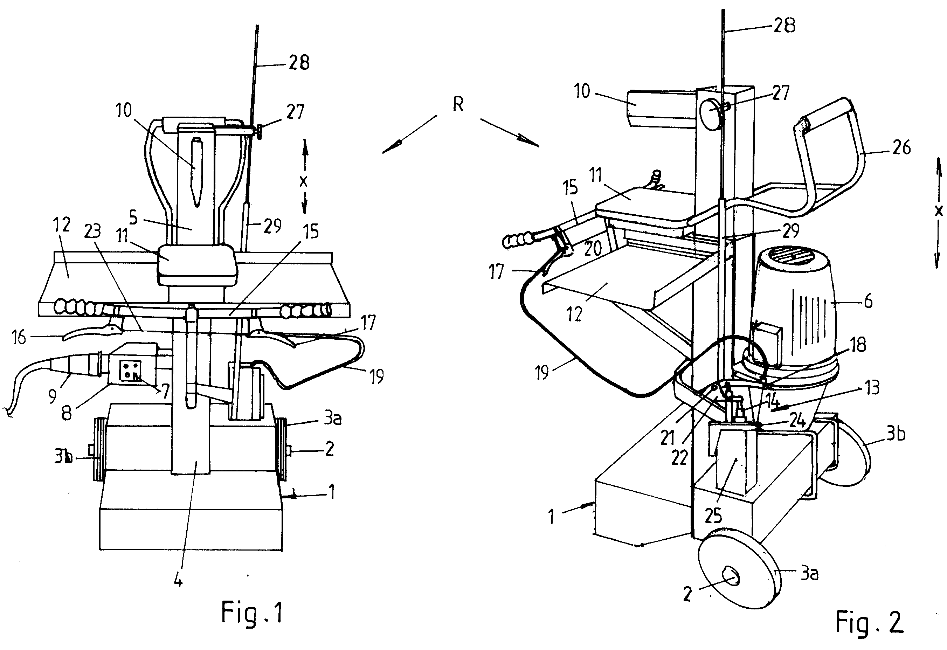

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in
Figur 1 eine Frontansicht einer erfindungsgemäßen Vorrichtung zum Spalten von elektronischen bzw. elektrotechnischen Bauteilen;
Figur 2 eine perspektivische Seitenansicht der erfindungsgemäßen Vorrichtung nach Figur 1.

Eine erfindungsgemäße Vorrichtung zum Spalten von elektronischen bzw. elektrotechnischen Bauteilen, insbesondere von Trafos, Spulenwicklungen od. dgl., weist ein Grundchassis 1 auf, welches eine Achse 2 sowie Räder 3a und 3b besitzt.

Von dem Grundchassis 1 ragt ein erstes Vierkantrohr 4 auf, in dem ein zweites Vierkantrohr 5 geführt ist. Dieses zweite Vierkantrohr 5 kann in dem ersten Vierkantrohr 4 in Richtung des Doppelpfeiles x gleiten, was durch einen entsprechenden Antrieb 6 bewirkt wird. Im vorliegenden Ausführungsbeispiel ist dieser Antrieb ein Elektromotor. Gedacht ist aber auch an beispielsweise einen Zapfwellenantrieb, der mit einer Schlepperhydraulik oder einem separaten Hydraulikantrieb gekoppelt sein kann.

Zum Einschalten des Antriebes 6 ist ein Schalter 7 an einem entsprechenden Steuergehäuse 8 vorgesehen, wobei dieses Steuergehäuse 8 mit einer Versorgungsleitung 9 in Verbindung steht.

An dem ersten Vierkantrohr 4 ist ein Spaltmesser 10 zum Durchschneiden des elektronischen bzw. elektrotechnischen Bauteils vorgesehen. Dabei liegt das elektronische bzw. elektrotechnische Bauteil auf einer Gegenplatte 11 auf, die wiederum auf einem Tisch 12 angeordnet ist.

Zum Einschalten der Bewegung des ersten Vierkantrohres 4 bzw. des Antriebes 6 ist eine besondere Schaltanordnung 13 vorgesehen. Diese Schaltanordnung 13 weist einen Stößel 14 auf, der abgestuft betätigt wird. Bei einer ersten Betätigung erfolgt noch kein Absenken des Spaltmessers 10 oder nur ein geringfügiges Absenken bis zum elektronischen bzw. elektrotechnischen Bauteil, wobei das Absenken jedoch sofort gestoppt wird, falls auf das Spaltmesser 10 ein Gegendruck wirkt. Erst wenn der Stößel 14 in einer zweiten Stufe weiterbetätigt wird, übt das Spaltmesser 10, angetrieben über den Antrieb 6, seinen vollen Spalt- bzw. Schneiddruck auf das Bauteil aus.

Erfindungsgemäß ist zum abgestuften Betätigen des Stößels 14 ein Bügel 15 an dem Tisch 12 oder dem ersten Vierkantrohr 4 festgelegt, welcher zwei Handhebel 16 und 17 aufweist. Dabei ist zwischen dem Handhebel 17 und einem Kipphebel 18 eine Tülle 19 eines bekannten Baudenzuges angeordnet. Die Tülle 19 stützt sich einerseits gegen den Kipphebel 18 und andererseits gegen eine Handhebelbefestigung 20 ab.

Bei Betätigung des Handhebels 17 wird hierdurch bewirkt, daß der Kipphebel 18 um ein Gelenk 21 mit dem ersten Vierkantrohr 4 schwenkt und dabei einen Druckhebel 22 auf den Stößel 14 drückt. Hierdurch wird ein Teil der Stößelbewegung erzeugt.

Um den zweiten Teil der Stößelbewegung herbeizuführen, ist der Handhebel 16 über einen Zug 23, der die Tülle 19 durchzieht mit einem Fixpunkt 24 an einer Stößelaufnahme 25 verbunden, so daß bei einer Betätigung des Handhebels 16 der Kipphebel 18 durch die Tülle 19 weiter nach unten gedrückt ist und der Stößel 14 weiter betätigt wird. Erst hierdurch wird der Antrieb 6 in vollem Umfange eingeschaltet.

An dem ersten Vierkantrohr 4 befindet sich ferner ein Handgriff 26 zum Transport der gesamten Vorrichtung R.

Zum Zwecke einer Hubbegrenzung des Spaltmessers 10 ist mit dem zweiten Vierkantrohr 5 über eine lösbare Befestigung 27 eine Stange 28 verbunden, die in einem Rohr 29 gleitet. Der Stange 28 ist, nicht näher gezeigt, ein entsprechender Endschalter zugeordnet. Hierdurch kann der Hubweg x begrenzt werden.

## Patentansprüche

1. Verfahren zum Aufbereiten von elektronischen bzw. elektrotechnischen Bauteilen, beispielsweise von Trafos, Spulenwicklungen, Elektromotoren od. dgl.,
dadurch gekennzeichnet,
daß die Bauteile gespalten bzw. geschnitten werden.

2. Vorrichtung zur Durchführung des Verfahrens nach Anspruch 1, dadurch gekennzeichnet, daß über einer Gegenplatte (11) zum Tragen des Bauteils ein Spaltmesser (10) angeordnet ist, welches einen Hub (x) zur Gegenplatte (11) hin ausführt.

3. Vorrichtung nach Anspruch 2, dadurch gekennzeichnet, daß ein Antrieb (6) für das Spaltmesser (10) abgestuft betätigbar ist, wobei in einer ersten Stufe keine oder nur eine geringe Betätigung und in einer zweiten Stufe eine volle Betätigung des Antriebes (6) erfolgt.

4. Verfahren nach Anspruch 2, dadurch gekennzeichnet, daß zur Betätigung des Antriebs (6) ein Stößel (14) od. dgl. vorgesehen ist, der über einen Baudenzug (19, 23) mit zwei Handhebeln (16, 17) in Verbindung steht.

5. Verfahren nach Anspruch 4, dadurch gekennzeichnet, daß zwischen einem Ende einer Tülle (19) des Baudenzuges und dem Stößel (14) ein Kipphebel (18) angeordnet ist, welcher um ein Gelenk (21) dreht und mit einem Druckhebel (22) den Stößel angreift.

6. Verfahren nach Anspruch 5, dadurch gekennzeichnet, daß das andere Ende der Tülle (19) an einem Handhebel (17) anschlägt, dessen Bewegung über die Tülle (19) auf den Kipphebel (18) übertragbar ist.

7. Verfahren nach Anspruch 6, dadurch gekennzeichnet, daß der andere Handhebel (16) über einen Zug (23) mit einem Fixpunkt (24) verbunden ist, wobei der Zug (23) teilweise durch die Tülle (19) geführt ist.

8. Verfahren nach wenigstens einem der Ansprüche 4 bis 7, dadurch gekennzeichnet, daß die zwei Handhebel (16, 17) an einem Bügel (15) angeordnet sind.

9. Verfahren nach wenigstens einem der Ansprüche 2 bis 8, dadurch gekennzeichnet, daß das Spaltmesser (10) an einem Vierkantrohr (5) festgelegt ist, welches den Hub (x) in einem Außenvierkantrohr (4) durchführt.

10. Verfahren nach Anspruch 9, dadurch gekennzeichnet, daß die Viertaktrohre (4, 5), der Antrieb (6) und die Schaltanordnung (13) aus Stößel (14), Baudenzug (19, 23), Handhebeln (16, 17) usw. auf einem verfahrbaren Chassis (1) aufsitzen.
